## Europäisches Patentamt

## European Patent Office

## Office européen des brevets

(11) Veröffentlichungsnummer: **0 039 499**
A2

(12) **EUROPÄISCHE PATENTANMELDUNG**

(21) Anmeldenummer: **81103342.2**

(22) Anmeldetag: **04.05.81**

(51) Int. Cl.³: **F 16 F 9/14,** B 60 G 11/22,
B 62 K 25/14, F 16 F 9/48

(30) Priorität: **07.05.80 IT 340980**

(43) Veröffentlichungstag der Anmeldung: **11.11.81**
**Patentblatt 81/45**

(84) Benannte Vertragsstaaten: **AT BE CH DE FR GB LI LU NL SE**

(71) Anmelder: **Tartarini, Leopoldo, Via Palazzetti,
I-40068 San Lazzaro di Savena (IT)**

(72) Erfinder: **Tartarini, Leopoldo, Via Palazzetti, I-40068 San
Lazzaro di Savena (IT)**

(74) Vertreter: **Porsia, Dino, c/o Succ. Ing. Fischetti & Weber
Via Caffaro 3, I-16124 Genova (IT)**

(54) **Scherenstossdämpfer.**

㉤ In einem abgedichteten, mit Dämpferflüssigkeit gefüllten, an einem Scherenarm (C1) befestigten Gehäuse (1) ist ein mit einem anderen Scherenarm (C2) verbundener Zapfen (4) drehbar gelagert, der einen radialen, dichtend gegen die kreiszylindrische Innenwandung des Gehäusemantels (101) anliegenden Verdrängerflügel (9) aufweist. Am Gehäusemantel (101) ist eine radiale, dichtend gegen den kreiszylindrischen Mantel des Zapfens (4) anliegende Trennwand (7) befestigt. Im Verdrängerflügel (9) und/oder in der Trennwand (17) sind Durchflussbohrungen mit Dämpfungsventilen für die Dämpferflüssigkeit vorgesehen.

0039499

### Scherenstossdämpfer

Die Erfindung betrifft einen Scherenstossdämpfer, insbe= sondere für Radaufhängungen in Zweiradfahrzeugen, wie Fahr= rädern, Motorrädern, Mopeds, od. dgl.

Die bisher bekannten Scherenstossdämpfer sind als Reibungs= dämpfer ausgebildet und weisen deshalb den Nachteil auf, dass die als Dämpferkraft benutzte Reibungskraft von der Schwinggeschwindigkeit unabhängig ist. Ausserdem werden Schwingungen mit kleinen Amplituden von den Reibungsdämpfern bis zum Erreichen der Losbrechkraft voll übertragen. Bei grossen Amplituden, insbesondere bei den grossen Federwegen der Radaufhängungen von geländegängigen Fahr- bzw. Motor= rädern reicht dagegen die mit den Reibungsdämpfern erzielbare Dämpfung oft nicht mehr aus.

Aufgabe der Erfindung ist es, diese Nachteile der bekannten Ausführungen zu beseitigen und einen Scherenstossdämpfer der eingangs genannten Art zu schaffen, dessen Dämpferkraft mit der Schwinggeschwindigkeit ansteigt und der auch bei kleinen Amplituden und bei kleinen Stössen sofort in Wirkung tritt bzw. auch grosse Hübe und infolgedessen entsprechend lange Federwege bei Radaufhängungen insbesondere von Zweiradfahrzeugen ermöglicht.

Diese Aufgabe wird erfindungsgemäss dadurch gelöst, dass mittig in einem abgedichteten, mit Dämpferflüssigkeit gefüllten, an dem einen Scherenarm befestigten Gehäuse ein mit dem anderen Scherenarm fest verbundener Zapfen drehbar gelagert ist, wobei das Gehäuse eine am Gehäusemantel befestigte, radial nach innen gerichtete, dichtend gegen den kreiszylindrischen Mantel des Zapfens anliegende Trennwand und der Zapfen einen gegenüber der Trennwand winkelversetzten, radial nach aussen gerichteten, dichtend gegen die kreiszylindrische Innenwandung des Gehäusemantels anliegenden Verdrängerflügel aufweisen und in der Trennwand und/oder im Verdrängerflügel Durchflussbohrungen bzw. -kanäle in Verbindung mit Dämpfungsventilen vorgesehen sind, die bei einer gegeneinander gerichteten Einschwenkbewegung der Scherenarme (Einfedern) einen grösseren Durchflussquerschnitt und bei einer auseinander gerichteten Ausschwenkbewegung der Scherenarme (Ausfedern) einen kleineren Durchflussquerschnitt für die verdrängte Dämpferflüssigkeit freilassen.

Der erfindungsgemässe Scherenstossdämpfer ist also als hydraulischer Stossdämpfer ausgebildet, wobei der mit dem Zapfen fest verbundene, radiale Verdrängerflügel als Schwingkolben wirkt und den zylindrischen Innenraum des Gehäuses in Verbindung mit der radialen gehäusefesten Trennwand in zwei Druckräume unterteilt. Beim Ein- und Ausfedern des Scherenstossdämpfers wird der radiale Verdrängerflügel entsprechend relativ zur gehäusefesten Trennwand ein- und ausgeschwenkt, wobei die verdrängte Dämpferflüssigkeit vom einen Druckraum in den anderen Druckraum durch die in der Trennwand und/oder im Verdrängerflügel vorgesehenen Durchflussbohrungen bzw. -kanäle und/ /oder Dämpfungsventile fliesst. Diese Durchflussbohrungen bzw. -kanäle und die Dämpfungsventile sind dabei so ausgebildet, dass beim Einfedern der Radaufhängung bzw. des Scherenstossdämpfers d.h. bei der gegeneinander gerichteten Einschwenkbewegung der Scherenarme ein grösserer Durchflussquerschnitt freigegeben und infolgedessen eine kleinere Dämpferkraft ausgeübt, dagegen beim Ausfedern der Radaufhängung bzw. des Scherenstossdämpfers d.h. bei der auseinander gerichteten Ausschwenkbewegung der Scherenarme ein kleinerer Durchflussquerschnitt freigelassen und infolgedessen eine grössere Dämpferkraft entwickelt wird. Diese Wirkungsweise des erfindungsgemässen Scherenstossdämpfers ist auch bei kleinen Schwingamplituden und Stössen gegeben. Die Dämpferkraft wird hydraulisch erzeugt und steigt infolgedessen mit der Schwinggeschwindigkeit an. Gleichzeitig weist der erfindungsgemässe Scherenstossdämpfer einen sehr grossen Hub auf, der sich im Falle von Radaufhängungen praktisch sogar über einen Winkel von etwas weniger als 180° erstrecken kann und entsprechend lange Federwege ermöglicht.

Die in der gehäusefesten radialen Trennwand und/oder im Verdrängerflügel vorgesehenen Durchflussbohrungen bzw. -kanäle und/oder Dämpfungsventile können in baulicher

0039499

Hinsicht beliebig ausgebildet sein. Besonders einfach hat sich eine Ausführungsform erweisen, in der als Dämpfungs= ventil ein Drosselrückschlagventil, d.h. ein in der einen Durchflussrichtung öffnendes, in der anderen Durchfluss= richtung jedoch nicht ganz schliessendes d.h. drosselndes Rückschlagventil vorgesehen ist.

Der erfindungsgemässe Scherenstossdämpfer kann in beliebiger Weise mit zwei relativ zueinander schwingenden, abgefederten Fahrzeug- bzw. Maschinenteilen verbunden, insbesondere zwischen einem Fahrzeugrad und dem Fahrzeugrahmen ange= ordnet werden. Besonders zweckmässig hat sich jedoch eine erfindungsgemässe Ausführungsform erwiesen, in der der Scherenstossdämpfer einen Bestandteil einer Gelenkgabel zur Aufhängung eines Fahrzeugrads, insbesondere in Zweiradfahr= zeugen, wie Fahrrädern, Motorrädern, Mopeds od. dgl. bildet, wobei der eine Scherenarm mit dem Fahrzeugrahmen verbunden ist und der andere Scherenarm die Radnabe trägt. Dabei können als Gelenkgabel zwei erfindungsgemässe Scherenstoss= dämpfer im Abstand nebeneinander und koaxial zueinander auf entgegengesetzten Seiten des Fahrzeugrads angeordnet sein, oder es kann ein einziger Scherenstossdämpfer mit gabel= förmig ausgebildetem unterem Scherenarm benutzt werden.

Die Federung der zwei relativ zueinander schwingenden, durch den erfindungsgemässen Scherenstossdämpfer untereinander verbundenen Fahrzeug- bzw. Maschinenteile kann ebenfalls beliebig ausgebildet sein. Insbesondere bei Radaufhängungen von Zweiradfahrzeugen, wie z.B. Fahrrädern, Motorrädern, Mopeds u. dgl. ist jedoch eine erfindungsgemässe Weiter= bildung des Scherenstossdämpfers vorteilhaft, bei der in dem zwischen dem Verdrängerflügel und der gehäusefesten Trennwand im Gehäuse gebildeten Druckraum, dessen Volumen beim Einfedern der Radaufhängung d.h. bei der gegeneinander gerichteten Einschwenkbewegung der Scherenarme verringert wird, als zumindest zusätzliche Federung ein gummielasti=scher, zwischen der gehäusefesten Trennwand und dem Verdränger=flügel bzw. einem gegenüber diesem winkelversetzten, radialen Federabstützflügel des Zapfens zusammendrückbarer Federkörper eingeschlossen ist.

Weitere Merkmale und Vorteile der Erfindung ergeben sich aus den Unteransprüchen und aus nachstehender Beschreibung eines in der Zeichnung schematisch dargestellten Ausführungs=beispiels.

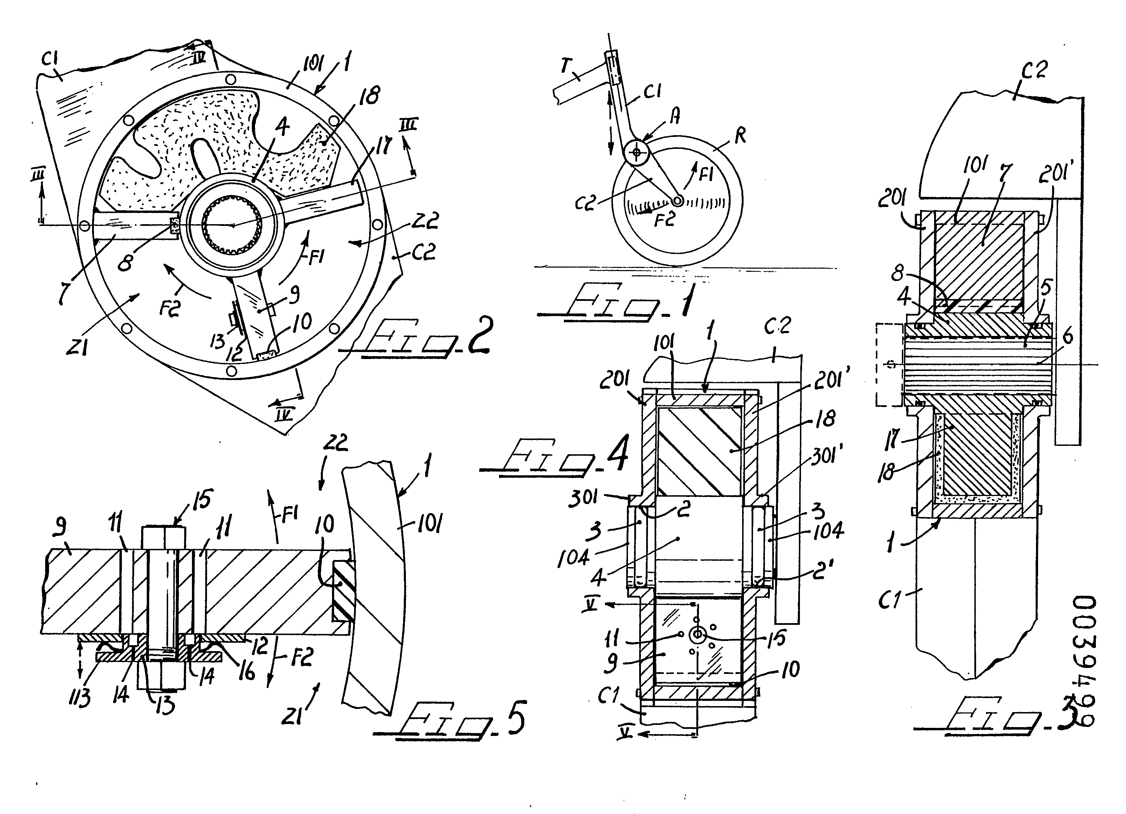

Fig. 1 zeigt in seitlichem Aufriss eine mit Hilfe des erfindungsgemässen Scherenstossdämpfers ausgebildete Vorderradgabel eines Zweiradfahrzeugs, z.B. eines Mopeds; Fig. 2 ist eine axiale Draufsicht auf das offenen Gehäuse des erfindungsgemässen Scherenstoss=dämpfers; Fig. 3 und 4 sind radiale Querschnitte durch den Scherenstossdämpfer nach den Linien III-III und IV-IV der Fig. 2; und Fig. 5 ist ein radialer Teilquerschnitt nach der Linie V-V der Fig. 4.

In der Zeichnung sind C1 und C2 die beiden Scherenarme eines erfindungsgemässen Scherenstossdämpfers A, der insbesondere bei dem in Fig. 1 dargestellten Ausführungsbeispiel die Gelenkgabel zur Aufhängung des Vorderrads R eines Zweirad=

0039499

fahrzeugs, z.B. eines Fahrrads, eines Motorrads, eines Mopeds od. dgl. bildet. Dabei können zwei gleiche, im Abstand nebeneinander liegende, zueinander koaxiale Scheren= stossdämpfer A benutzt werden, deren obere Scherenarme C1 mit dem Fahrzeugrahmen T insbesondere lenkbar verbunden sind, während die unteren Scherenarme C2 an ihren Enden die Nabe des Vorderrads R tragen. Andererseits kann die Gelenkgabel für das Vorderrad R auch aus einem einzigen Scherenstossdämpfer A bestehen, das einen einzigen, oberen, mit dem Fahrzeugrahmen T lenkbar verbundenen Scherenarm C1 und einen gabelförmig ausgebildeten, unteren Scherenarm C2 mit der Radnabenlagerung aufweist.

In beiden Fällen weist der bzw. jeder erfindungsgemässe Scherenstossdämpfer A ein dicht geschlossenes Gehäuse 1 auf, das aus einem kreiszylindrischen Mantel 101 und zwei daran befestigten Deckeln 201 und 201' besteht. Der Gehäusemantel 1 ist mit dem einen z.B. oberen Scherenarm C1 fest verbunden. In mittleren, zueinander koaxialen, mit äusseren Ringkragen 301, 301' versehenen Lagerbohrungen 2, 2' der Gehäusedeckel 201, 201' sind mit Hilfe von ringförmigen Dichtungen, ins- besondere O-Ringen 3 die beiden abgesetzten Enden 104 eines das Gehäuse 1 durchsetzenden, als Keilhülse ausgebildeten Hohlzapfens 4 drehbar gelagert, in den ein passender, mit dem anderen, unteren Scherenarm C2 fest verbundener Keilzapfen 6 gesteckt ist. Dadurch wird eine formschlüssige lösbare Verbindung zwischen dem Scherenarm C2 und dem drehbar im Gehäuse 1 gelagerten Zapfen 4 erzielt.

An dem Gehäusemantel 101 ist eine innere, radial gerichtete Trennwand 7 befestigt, z.B. angeformt oder angeschweisst, die sich bis zur zylindrischen Mantelfläche des Zapfens 4 erstreckt und gegen diese Mantelfläche dichtend mit Hilfe einer Dichtung 8 anliegt. In einer bei ausgefederter Radaufhängung bzw. bei unbelastetem Fahrzeugrad R gegenüber der Trennwand 7 winkelversetzten Stellung ist am Zapfen 4 ein radialer Verdrängerflügel 9 befestigt, z.B. angeformt oder angeschweisst, der sich nach aussen bis zum kreiszylindrischen Mantel 101 des Gehäuses 1 erstreckt und gegen die Innenwand des Gehäusemantels 101 dichtend mit Hilfe einer Dichtung 10 anliegt. Der Verdrängerflügel 9 unterteilt den Innenraum des Gehäuses 1 in Verbindung mit der gehäusefesten Trennwand 7 in zwei Druckräume Z1 und Z2, die mit einer Dämpferflüssigkeit, insbesondere Stossdämpferöl gefüllt sind.

In dem Verdrangerflügel 9 ist ein Dämpfungsventil vorgesehen, das als Drosselrückschlagventil ausgebildet ist und bei der Relativbewegung des Verdrängerflügels 9 gegenüber der Trennwand 7 in der Pfeilrichtung F1 einen grösseren Durchflussquerschnitt, dagegen bei der Relativbewegung des Verdrängerflügels 9 gegenüber der Trennwand 7 in der entgegengesetzten Pfeilrichtung F2 einen kleineren, d.h. gedrosselten Durchflussquerschnitt für die Dämpferflüssigkeit öffnet. Bei dem dargestellten Ausführungsbeispiel ist in dem Verdrängerflügel 9 ein Kranz von durchgehenden Durchflussbohrungen 11 vorgesehen, die auf der dem Druckraum Z1 zugekehrten Seite des Verdrängerflügels 9 in ihrem äusseren Querschnittsbereich durch den Innenrandteil einer ebenen elastischen Abschlusscheibe 12 und in ihrem inneren Querschnittsbereich durch den Aussenrandteil eines pfannenförmigen Ventilkörpers 13 abgedeckt und geschlossen sind. Die Durchflussbohrungen 11 des Verdrängerflügels 9 laufen dabei in ihrem inneren Querschnittsbereich in die gegen den Verdrängerflügel 9 gerichtete Hohlseite des pfannenförmigen Ventilkörpers 13 aus. In dem vom Verdrängerflügel 9 abgekehrten Bodenteil des pfannenförmigen Ventilkörpers 13 ist ein Kranz feiner Durchflussbohrungen 14 vorgesehen. Der pfannenförmige Ventilkörper 13 ist mit Hilfe eines mittleren Bolzens 15 am Verdrängerflügel 9 befestigt und wird von der ringförmigen Abschlusscheibe 12 eng umgriffen. Dabei wird die Abschlusscheibe 12 von einer von einem Flansch 113 des Ventilkörpers 13 abgestützten, z.B. tellerförmigen Feder 16 gegen den Verdrängerflügel 9 gedrückt.

In der Fliessrichtung der Dämpferflüssigkeit vom Druckraum Z2 in den Druckraum Z1, d.h. von oben nach unten in Fig. 5, werden sowohl der Innenrand der ebenen Abschlusscheibe 12 als auch der Aussenrand des pfannenförmigen Ventilkörpers 13 durch den Flüssigkeitsdruck federnd vom Verdrängerflügel 9 abgehoben und öffnen infolgedessen die grossen Durchflussbohrungen 11. Die Dämpferflüssigkeit kann deshalb frei bzw. mit einer geringen Drosselwirkung aus dem Druckraum Z2 in den Druckraum Z1 fliessen. In der entgegengesetzten Fliessrichtung der Dämpferflüssigkeit vom Druckraum Z1 in den Druckraum Z2, d.h. von unten nach oben in Fig. 5, werden sowohl der Innenrand der Abschlusscheibe 12 als auch der Aussenrand des Ventilkörpers 13 durch den Flüssigkeitsdruck gegen den Verdrängerflugel 9 gedrückt und schliessen dabei die Durchflussbohrungen 11 ab. Die Dämpferflüssigkeit kann infolgedessen nur durch die feinen Durchflussbohrungen 14 im Ventilkörper 13 aus dem Druckraum Z1 in den Druckraum Z2 fliessen und wird deshalb stark gedrosselt.

Selbstverständlich kann die selbe, oben beschriebene Dämpferwirkung mit Hilfe von beliebigen, anders gebauten Dämpfungsventilen erzielt werden. So z.B. kann in Verbindung mit den grösseren Durchflussbohrungen 11 im Verdrängerflügel 9 ein beliebiges, in der Fliessrichtung vom Druckraum Z2 zum Druckraum Z1 öffnendes bzw. in der entgegengesetzten Fliessrichtung vom Druckraum Z1 zum Druckraum Z2 ganz schliessendes Rückschlagventil angeordnet sein, während die feineren Durchflussbohrungen 14 um dieses Ventil herum im Verdrängerflügel 9 vorgesehen sind und entweder dauernd offen stehen, oder einem in umgekehrter Fliessrichtung schliessenden und öffnenden Rückschlagventil zugeordnet sind. Die Durchflussbohrungen und/oder die Dämpfungsventile für die Dämpferflüssigkeit können nur oder auch in der gehäusefesten Trennwand 7 und/oder in den Dichtungen 8 bzw. 10 zwischen der Trennwand 7 und dem Zapfen 4 bzw. zwischen dem Verdrängerflügel 9 und der Innenwand des Gehäusemantels 101 vorgesehen sein.

Die Federung der mit dem erfindungsgemässen Scherenstossdämpfer erstellten Gelenkgabel für die Radaufhängung von insbesondere Zweiradfahrzeugen kann beliebig ausgebildet sein und z.B. aus äusseren, zwischen den Scherenarmen C1, C2 eingespannten Federn bestehen. Vorzugsweise ist jedoch ein gummielastischer Federkörper 18 in dem Gehäuse 1 des Scherenstossdämpfers A eingeschlossen und zwar in dem Druckraum Z2, dessen Volumen bei der gegeneinander gerichteten Einschwenkbewegung der Scherenarme C1, C2 verkleinert wird, wie insbesondere in Fig. 2 dargestellt ist. Dabei ist dieser Federkörper 18 zwischen der gehäusefesten Trennwand 7 und dem Verdrängerflügel 9 oder einem besonderen, winkelversetzt zum Verdrängerflügel 9 am Zapfen 4 befestigten, radialen Federabstützflügel 17 eingespannt. Im Gegensatz zum Verdrängerflügel 9 ist der Federabstützflügel 17 weder gegenüber dem Gehäusemantel 101 noch gegenüber den beiden Gehäusedeckeln 201, 201' abgedichtet, wie insbesondere aus Fig. 3 ersichtlich ist. Der in der Dämpferflüssigkeit getauchte Federkörper 18 besteht vorzugsweise aus gummielastischem Kunststoff und kann im entspannten Zustand eine die Federwirkung erhöhende, insbesondere wellenförmige Gestalt aufweisen.

Beim Einfedern der Gelenkgabel zur Aufhängung des Vorderrads R nach Fig. 1, schwingt der untere Scherenarm C2 zusammen mit dem Rad R nach oben in der Pfeilrichtung F1 gegenüber dem oberen Scherenarm C1. Dadurch wird der Zapfen 4 des Scherenstossdämpfers A zusammen mit dem Verdrängerflügel 9 und dem Federabstützflügel 17 in der selben Pfeilrichtung F1 gegenüber dem Gehäuse 1 verdreht. Der Federkörper 18 wird zwischen der gehäusefesten Trennwand 7 und dem Federabstützflügel 17 elastisch zusammengedrückt und bewirkt dadurch die Abfederung. Die vom Verdrängerflügel 9 aus dem Druckraum Z2 in den Druckraum Z1 verdrängte Dämpferflüssigkeit öffnet in der bereits beschriebenen Weise das Drosselrückschlagventil im Verdrängerflügel 7 und fliesst ungedrosselt oder nur schwach gedrosselt durch die grossen Durchflussbohrungen 11. Beim Ausfedern der Gelenkgabel schwingt der untere Scherenarm C2 zusammen mit dem Rad R nach unten in der Pfeilrichtung F2 gegenüber dem oberen Scherenarm C1. Dadurch wird der Zapfen 4 des Scherenstossdämpfers A zusammen mit dem Verdrängerflügel 9 und dem Federabstütz= flügel 17 in der selben Pfeilrichtung F2 gegenüber dem Ge= häuse 1 verdreht. Die vom Verdrängerflügel 9 aus dem Druck= raum Z1 in den Druckraum Z2 verdrängte Dämpferflüssigkeit schliesst das Drosselrückschlagventil im Verdrängerflügel 9 und fliesst gedrosselt durch die feinen Durchflussbohrungen 14 des Ventilkörpers 13. Dadurch wird die Ausschwenkbewegung des unteren Scherenarms C2 mit dem Rad R abgebremst und der Federkörper 18 wird entsprechend langsamer entspannt.

Der im Stossdämpfergehäuse 1 eingeschlossene, gummielasti= sche Federkörper 18 braucht nicht die einzige Federung der Gelenkgabel zur Aufhängung des Fahrzeugrads R zu sein, sondern es können zusätzlich beliebige andere Federelemente zwischen den beiden Scherenarmen C1, C2 vorgesehen sein. Ins= besondere kann auch der obere Scherenarm C1 gegenüber dem Fahrzeugrahmen T abgefedert sein. Ausserdem ist es möglich, den mit dem Zapfen 4 und infolgedessen mit dem Verdränger= flügel 9 verbundenen Scherenarm C2 nach unten zu richten und am Fahrzeugrahmen T zu befestigen und das Fahrzeugrad R auf dem mit dem Gehäuse 1 fest verbundenen, nach unten ge= richteten Scherenarm C1 zu lagern.

## Patentansprüche

1. Scherenstossdämpfer, insbesondere für Radaufhängungen in Zweiradfahrzeugen, wie Fahrrädern, Motorrädern, Mopeds od. dgl., dadurch gekennzeichnet, dass mittig in einem abgedichteten, mit Dämpferflüssigkeit gefüllten, an dem einen Scherenarm (C1) befestigten Gehäuse (1) ein mit dem anderen Scherenarm (C2) fest verbundener Zapfen (4) drehbar gelagert ist, wobei das Gehäuse (1) eine am Gehäusemantel (101) befestigte, radial nach innen gerichtete, dichtend gegen die kreiszylindrische Mantelfläche des Zapfens (4) anliegende Trennwand (7) und der Zapfen (4) einen gegenüber der Trennwand (7) winkelversetzten, radial nach aussen gerichteten, dichtend gegen die kreiszylindrische Innenwandung des Gehäusemantels (101) anliegenden Verdrängerflügel (9) aufweisen und in der Trennwand (7) und/oder im Verdrängerflügel (9) Durchflussbohrungen (11, 14) bzw. -kanäle in Verbindung mit Dämpfungsventilen (12, 13) vorgesehen sind, die bei einer gegeneinander gerichteten Einschwenkbewegung (Einfedern) der Scherenarme (C1, C2) einen grösseren Durchflussquerschnitt und bei einer auseinander gerichteten Ausschwenkbewegung (Ausfedern) der Scherenarme (C1, C2) einen kleineren Durchflussquerschnitt für die verdrängte Dämpferflüssigkeit freilassen.

2. Scherenstossdämpfer nach Anspruch 1, dadurch gekennzeichnet, dass als Dämpfungsventil ein Drosselrückschlagventil d.h. ein in einer Durchflussrichtung öffnendes, in der entgegengesetzten Durchflussrichtung nicht ganz schliessendes und infolgedessen drosselndes Rückschlagventil (11, 12, 13, 14) vorgesehen ist.

3. Scherenstossdämpfer nach Anspruch 1 oder 2, dadurch gekennzeichnet dass er einen Bestandteil einer Gelenkgabel zur Aufhängung eines Fahrzeugrads (R), insbesondere in Zweiradfahrzeugen wie Fahrrädern, Motorrädern, Mopeds od. dgl. bildet, wobei der eine Scherenarm (C1) mit dem Fahrzeugrahmen (T) verbunden ist und der andere Scherenarm (C2) das Fahrzeugrad (R) trägt.

4. Scherenstossdämpfer nach Anspruch 3, dadurch gekennzeichnet, dass als Gelenkgabel zwei Scherenstossdämpfer (A) im Abstand nebeneinander und koaxial zueinander auf entgegengesetzten Seiten des Fahrzeugrads (R) angeordnet sind.

5. Scherenstossdampfer nach Anspruch 3, dadurch gekennzeichnet, dass als Gelenkgabel ein einziger Scherenstossdämpfer (A) mit gabelförmig ausgebildetem unterem Scherenarm (C2) angeordnet ist.

6. Scherenstossdämpfer nach einem der Ansprüche 1 bis 5, dadurch gekennzeichnet, dass in dem zwischen dem Verdrängerflügel (9) und der gehäusefesten Trennwand (7) im Gehäuse (1) gebildeten Druckraum (Z2), dessen Volumen beim Einfedern der Radaufhängung d.h. bei der gegeneinander gerichteten Einschwenkbewegung der Scherenarme (C1, C2) verringert wird, ein gummielastischer, zwischen der gehäusefesten Trennwand (7) einerseits und dem Verdrängerflügel (9) bzw. einem gegenüber diesem winkelversetzten, radialen Federabstützflügel

(17) des Zapfens (4) andererseits zusammendrückbarer Federkörper (18) eingeschlossen ist.

7. Scherenstossdampfer nach Anspruch  6, dadurch gekennzeichnet, dass der gummielastische Federkörper (18) aus
Kunststoff besteht.

8. Scherenstossdämpfer nach Anspruch 6 oder 7, dadurch gekennzeichnet, dass der gummielastische Federkörper (18)
im entspannten Zustand eine wellenförmige Gestalt aufweist.

Fig.1 Fig.2 Fig.3 Fig.4 Fig.5